# EUROPEAN PATENT APPLICATION

(11) **EP 1 467 469 A1**
(43) Date of publication of application: **13.10.2004**
(21) Application number: 03701033.7
(22) Date of filing: 09.01.2003
(51) Int. Cl.: H02K 15/02, H02K 1/02, H02K 1/18

(54) **PRODUCTION METHOD FOR AMORPHOUS LAMINATE CORE AND AMORPHOUS LAMINATE CORE**

(30) Priority: 17.01.2002 JP 2002009213
(71) Applicant: Mitsui High-tec, Inc., Kitakyushu-shi, Fukuoka 806-8588 (JP)
(72) Inventor: FUJITA, Katsufusa, c/o Mitsui High-tec. Inc., Kitakyushu-shi, Fukuoka 806-8588 (JP)
(74) Representative: Hager, Thomas J., Dipl.-Ing.
(86) International application number: PCT/JP2003/000108
(87) International publication number: WO 2003/061101

(57) **Abstract**

The invention is to provide a method of making an amorphous laminated core having sufficient caulking strength and core shaping precision and having high precision in shaping the core and the caulking strength even if the amorphous laminated core has the minimum size for pocket telephones, and to provide such an amorphous laminated core. That is, a method of making the amorphous laminated core by punching core pieces from the amorphous thin sheet material, laminating the plural sheets of core pieces and caulking them, comprises a step of laminating the plural sheets of the core pieces having the caulking through-holes formed by punching, a step of inserting rod shaped materials into the caulking through-holes of the laminated core pieces, and a step of pushing back the inserted rod materials, thereby to caulk the core pieces of the plurality of laminated sheets. Further, in the amorphous laminated core, non-magnetic rod shaped materials are put in the caulking through-holes.

## Description

### Technical Field of the Invention

This invention relates to a core used to a motor, in particular a method of manufacturing a laminated core by laminating core pieces punched out from an amorphous thin sheet material, and to an amorphous laminated core.

### Background of the Invention

It has recently been proposed to apply amorphous materials having high permeability and less iron loss as cores for heightening efficiency of motors and saving energy.

The core employing the amorphous material is, as seen in Japanese Patent Publication Hei-5-109545/(1993), alternately laminated with oriented silicon steel sheets and the amorphous materials, and a laminated body is mechanically connected by caulking.

Japanese Patent Publication Hei-9-215279/(1997) discloses the caulking by use of projections and through-holes as caulking means of the laminated core.

For production thereof, since the composing material, especially, the amorphous material has high brittleness and it itself is very thin, the production does not depend on punching out one sheet by one sheet but depends on steps of laminating the plural amorphous thin sheets unified in one body via adhesives, followed by integrally punching the caulking through-holes and caulking projections.

Thus, it has been adopted to use the caulking means for a final caulking.

However, in case the materials are once laminated and then punched out, since punching is done especially on a plurality of layered materials of high brittleness, it is difficult to stably form caulking projections having depth of getting into the caulking through-holes in the lower layers of the amorphous laminated sheets, so that sufficient caulking strength is not effected.

In addition, the lamination formed core is weak in the caulking strength and has a problem of broken a shape of the core.

Further, there is a problem that micro cores for such as pocket telephones could not be produced from the amorphous thin sheet material.

Accordingly, it is an object of the invention to solve existing problems involved with the production of the laminated core using the amorphous substances, and to provide a method of making the amorphous laminated core having sufficient caulking strength and core shaping precision and having high precision in shaping the core and the caulking strength even if the amorphous laminated core has the minimum size for pocket telephones, and to provide such an amorphous laminated core.

### Disclosure of Invention

Subject matters of the amorphous laminated core making method according to the invention and the amorphous laminated core for settling the above mentioned problems are present in the following (1) to (6).
(1) In the method of manufacturing the amorphous laminated core by punching core pieces from the amorphous thin sheet material, laminating the plural sheets of core pieces and caulking them, the method comprising
   a step of laminating the plural sheets of the core pieces having the caulking through-holes formed by punching,
   a step of inserting rod shaped materials into the caulking through-holes of the laminated core pieces, and
   a step of pushing back the inserted rod materials,
   thereby to caulk the core pieces of the plurality of laminated sheets.
(2) The method of manufacturing the amorphous laminated core, wherein the rod material inserted in the caulking through-hole is non-magnetic.
(3) The method of manufacturing the amorphous laminated core, wherein the rod material inserted in the caulking through-hole is formed on an outer circumference with a rough surface or grooves perpendicular with length.
(4) In the amorphous laminated core made by punching core pieces from the amorphous thin sheet material and laminating the plural sheets of the core pieces, the non-magnetic rod materials are fitted in the caulking through-holes of the laminated core pieces.
(5) In the amorphous laminated core made by punching core pieces from the amorphous thin sheet material and laminating the plural sheets of the core pieces, the rod materials are inserted in the caulking through-holes of the laminated core pieces, the rod material being non-magnetic and being formed on the outer circumference with the rough surface or grooves perpendicular with length.
(6) The caulking through-holes are characterized in that a plurality of caulking through-holes are formed on inner circumferential sides and outer circumferential sides of wiring slots defined in the amorphous laminated core.

In accordance with the above (1) structure, the invention inserts the rod materials into the caulking through-holes of the laminated core pieces, and then pushes back the inserted rod materials, so that the inserted rod materials fit with burrs or bent-deformed parts generated on the punched edges of the caulking through-holes.

When the inserted rod materials are pushed back, those are more firmly fitted in the caulking through-holes, shapes of perpendicular degree or parallel degree of the laminated core are made excellent.

In accordance with the above (2) structure, the rod materials inserted in the caulking through-holes are non-magnetic, whereby in case the rod materials exist in the caulking through- holes of the produced laminated core, magnetic insularity can be secured between the laminated core pieces, and also in this regard, iron loss may be reduced.

In accordance with the above (3) structure, the rod materials inserted in the caulking through-holes are formed on the outer circumference with the rough surface or the grooves perpendicular with length, whereby the fitting degree with the inner face of the caulking through-hole is more reinforced to more increase the caulking strength.

In accordance with the above (4) structure, the laminated core pieces are caulked by fitting with the non-magnetic rod materials in the caulking through-holes, and those are unified with the sufficient caulking strength without causing cracks in caulked parts.

In accordance with the above (5) structure, the laminated core pieces are caulked by fitting with the rod materials, the rod materials being non-magnetic and being formed on the outer circumference thereof with the rough surface or the grooves perpendicular with length, so that the rod materials are fitted with the inner circumference of the caulking through-holes, and magnetic insularity can be secured between the laminated core pieces, and the iron loss may be reduced.

In accordance with the above (6) structure, an excellent amorphous laminated core for rotors may be realized.

### Brief Description of Drawings

Fig. 1 is a view showing a process of punching the core pieces from the amorphous thin sheet material;
Fig. 2 is a view showing the core produced by laminating the core pieces; and
Fig. 3 is views showing the caulked conditions of the laminated core pieces.

In the drawings, reference numeral 1 designates guide holes, 2 is wiring slots, 3 is caulking through-holes, 4 is outer shapes of the core pieces, 5 is an inner shape of the same, 10 is the core piece, 11 is the laminated core, 20 is the rod material, and 100 is the amorphous thin sheet material.

### Best Mode for Carrying Out the Invention

Explanation will be made to embodiments applying the invention to production of the laminated core of a rotor with reference to the attached drawings.

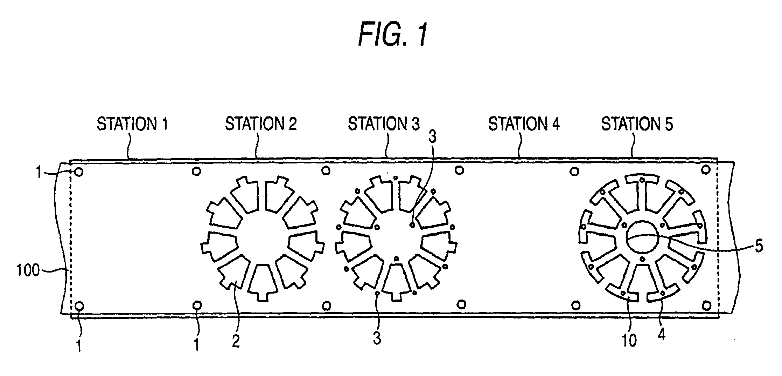

Fig. 1 is the process of punching the core pieces from the amorphous thin sheet material, showing a punching and forming order of the laminated core in forming-positions (stations) of a consecutively molding apparatus.

Referring to Fig. 1, in a station 1, for punching the core pieces from the amorphous thin sheet material 100, guide holes 1 functioning as positioning in the respective stations are punched separately in width and length directions of the amorphous thin sheet material 100.

At station 2, it is punched circumferentially desired number of wiring slots 2 (in the instant embodiment, the nine pieces).

The number or shapes of the wiring slots 2 may be modified as needed, not limiting to this embodiment.

At station 3, it is punched the caulking through-holes 3 respectively in an inner circumferential side and an outer circumferential side of the wiring slots 2 formed in the station 2.

The caulking through-hole 3 is round in this embodiment, but may be rectangular, polygonal or oval.

A station 4 is provided for idle.

At station 5, it is punched outer shapes 4 as to include the caulking through-holes 3 formed in the station 3, as well as an inner shape 5 as to punch the laminated cores 10 through a die (not shown), and laminates to form the laminated core 11.

The explanation with Fig. 1 refers to the order of the process punching the core pieces from the amorphous thin sheet material as the station 1 to the station 5 of processing the guide holes 1, the wiring slots 2, the caulking through-holes 3, the outer shapes 4 and the inner shape 5, but the punching order is not limited to this example, but as far as the punched core pieces are formed with the caulking through-holes, apparently the punching order is not fixed.

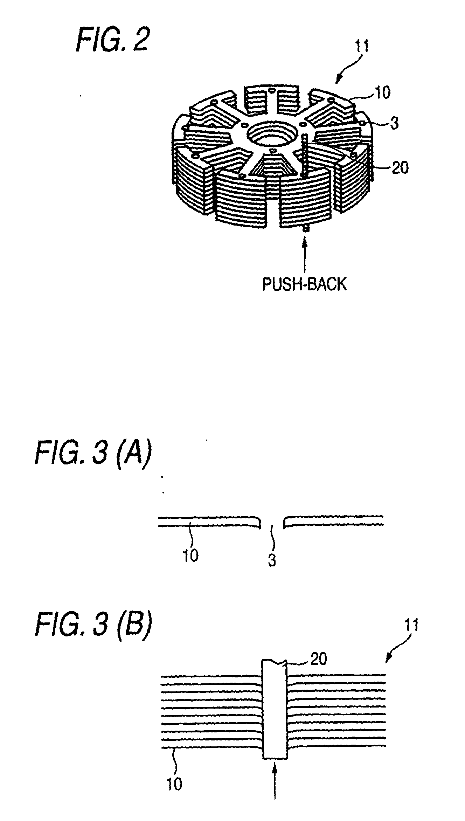

Fig. 2 shows the core 11 produced by laminating the core pieces 10.

As shown in Fig. 2, the core pieces 10 produced in the station 5 of Fig. 1 are, of course, laminated in such a manner that the caulking through-holes 3 of the respective core pieces 10 are uniform in the vertical directions.

The rod materials 20 made of the non-magnetic substance (for example, stainless steel or synthetic resin) are inserted into the caulking through-holes 3 at the upper parts, and then the inserted rod materials 20 are pushed back in an arrowed direction at the lower parts, so that the laminated cores are caulked.

At a time of accomplishing the caulking, the rod materials are cut out at projecting portions from the upper and lower parts of the caulking through-holes of the laminated core.

Fig. 3 shows the conditions of caulking the laminated core pieces.

As seeing in Fig. 3A, when the caulking through-holes 3 are punched from the amorphous thin sheet material, since the amorphousmaterialsarebrittleandlackworkability, thepunched caulking through-holes 3 are generated with burrs or bent-deformed parts on the punched edges.

The burrs or bent-deformed parts on the punched edges are larger in the amorphous thin sheet material than those of thin iron sheets such as electromagnetic steel sheets.

With respect to the laminated core piece 11, as seeing in Fig. 3B, the rod materials 20 are inserted into the caulking through-holes 3, and the inserted rod materials 20 are pushed back at the lower parts of the caulking through-holes, whereby the fitting degree increases between the punched and deformed parts (burrs or bent parts) of the punched edges and the rod materials 20, so that the amorphous strength accordingly increases.

As is seen, since the caulking strength can be increased, the laminated core pieces 11 are excellent in shape.

This effect is exhibited similarly, irrespective of the laminated core 11 being small or large in size.

In the embodiments, the explanation has been made with the example of the rotor core, and self-evidently, the same may be applied to a stator core, or a laminated core of transformer.

The above explanation has been made in that the core pieces are punched one by one of the amorphous thin sheet material, and for caulking the plural sheets of core pieces in case of punching the plural laminated amorphous thin sheet materials, the same performance as mentioned above may be carried out.

### Industrial Applicability

The method of making the amorphous laminated core of the invention of punching core pieces from the amorphous thin sheet material, laminating the plural sheets of core pieces and caulking them, comprises a step of laminating the plural sheets of the core pieces having the caulking through-holes formed by punching, a step of inserting rod shaped materials into the caulking through-holes of the laminated core pieces, and a step of pushing back the inserted rod materials, thereby to caulk the core pieces of the plurality of laminated sheets, whereby the rod shaped materials firmly fit with the caulking though-holes and heighten the caulking strength.

As a result, the shapes in the perpendicular degree or the parallel degree of the laminated core are made excellent, and as the punched forms composing the caulking parts are only the through-holes, the hole sizes maybe made very small, enabling to produce minimum amorphous laminated core.

For punching the amorphous thin sheet, it is unnecessary to punch any inserting projections for caulking, so that there occurs no breakage owing to brittleness of the amorphous material itself with effects of increasing forming yield.

By the way, the invention is not limited to the above mentioned embodiments.

## Claims

1. A method of manufacturing the amorphous laminated core by punching core pieces from the amorphous thin sheet material, laminating the plural sheets of core pieces and caulking them, comprising
a step of laminating the plural sheets of the core pieces having the caulking through-holes formed by punching,
a step of inserting rod shaped materials into the caulking through-holes of the laminated core pieces, and
a step of pushing back the inserted rod materials,
thereby to caulk the core pieces of the plurality of laminated sheets.

2. The method of making the amorphous laminated core as set forth in claim 1, wherein the rod materials inserted in the caulking through-holes are non-magnetic.

3. The method of making the amorphous laminated core as set forth in claim 1 or 2, wherein the rod materials inserted in the caulking through-holes are formed on an outer circumference with a rough surface or grooves perpendicular with length.

4. An amorphous laminated core made by punching core pieces from an amorphous thin sheet material and laminating a plurality of sheets of the core pieces, wherein non-magnetic rod materials are fitted in caulking through-holes of the laminated core pieces.

5. An amorphous laminated core made by punching core pieces from an amorphous thin sheet material and laminating a plurality of sheets of the core pieces; wherein rod materials are inserted in caulking through-holes of the laminated core pieces, the rod material being non-magnetic and being formed on the outer circumference with the rough surface or grooves perpendicular with length.

6. The amorphous laminated core as set forth in claim 4, wherein a plurality of caulking through-holes are formed on inner circumferential sides and outer circumferential sides of wiring slots defined in the amorphous laminated core.
